## Europäisches Patentamt

## European Patent Office

## Office européen des brevets

(19)

(11) **EP 0 778 471 B1**

(12)

# FASCICULE DE BREVET EUROPEEN

(45) Date de publication et mention
de la délivrance du brevet:
**02.01.2002   Bulletin 2002/01**

(51) Int Cl.$^7$: **G01S 13/90**

(21) Numéro de dépôt: **96402522.5**

(22) Date de dépôt: **22.11.1996**

(54) **Procédé de détection au moyen d'un radar et radar pour la mise en oeuvre de ce procédé**

Verfahren und Vorrichtung zur Radardetektion

Radar detection method and system

(84) Etats contractants désignés:
**BE CH DE ES GB IT LI NL**

(30) Priorité: **08.12.1995   FR 9514555**

(43) Date de publication de la demande:
**11.06.1997   Bulletin 1997/24**

(73) Titulaire: **AEROSPATIALE MATRA**
**75016 Paris (FR)**

(72) Inventeurs:
  • **Hervé, Patrick**
    **75007 Paris (FR)**
  • **Peyregne, Rémi**
    **75012 Paris (FR)**

(74) Mandataire: **Bonnetat, Christian**
**CABINET BONNETAT 29, rue de St. Pétersbourg**
**75008 Paris (FR)**

(56) Documents cités:
**WO-A-88/10434**

• **GEC JOURNAL OF RESEARCH (INCORPORATING MARCONI.REVIEW.), vol. 7, no. 3, 1 Janvier 1989, pages 168-182, XP000126267 BLACKNELL D ET AL: "MOTION COMPENSATION OF AIRBORNE SYNTHETIC APERTURE RADARS USING AUTOFOCUS"**
• **IEEE TRANSACTIONS ON AEROSPACE AND ELECTRONIC SYSTEMS, vol. 30, no. 3, Juillet 1994, NEW YORK US, pages 827-834, XP000459413 WAHL,EICHEL, GHIGLIA AND JAKOWATZ: "Phase Gradient Autofocus - A Robust Tool for High Resolution SAR Phase Correction"**
• **REMOTE SENSING: MOVING TOWARDS THE 21ST. CENTURY, EDINBURGH, SEPT. 12 - 16, 1988, vol. 2, 12 Septembre 1988, GUYENNE T D;HUNT J J, pages 699-702, XP000093154 "MOTION COMPENSATION USING SAR AUTOFOCUS"**
• **MULTIDIMENSIONAL SIGNAL PROCESSING, SAN FRANCISCO, MAR. 23 - 26, 1992, vol. 3, 23 Mars 1992, INSTITUTE OF ELECTRICAL AND ELECTRONICS ENGINEERS, pages 5-8, XP000378859 DALL J: "A FAST AUTOFOCUS ALGORITH FOR SYNTHETIC APERTURE RADAR PROCESSING"**

**Description**

La présente invention concerne un procédé de détection au moyen d'un radar à synthèse d'ouverture, ainsi qu'un radar à synthèse d'ouverture pour la mise en oeuvre de ce procédé.

On sait qu'un radar à synthèse d'ouverture, qui est généralement embarqué à bord d'un aéronef, est particulièrement bien approprié à l'observation de la terre.

De plus, un tel radar présente de très nombreux avantages qui expliquent le grand intérêt et le développement important de ce type de radar, en particulier :

- il peut être utilisé par tout temps ;
- il présente un encombrement réduit ; et
- ses traitements sont peu dépendants de la distance d'observation.

De façon connue, un tel radar à synthèse d'ouverture comporte des moyens pour réaliser successivement les opérations suivantes :

- émettre un rayonnement électromagnétique en direction d'un territoire observé et survolé par l'aéronef porteur dudit radar ;
- détecter un signal correspondant audit rayonnement électromagnétique renvoyé par ledit territoire survolé et observé ;
- effectuer un traitement de détermination de distance, à partir dudit signal détecté ;
- effectuer un traitement de focalisation destiné à corriger un déphasage perturbateur existant dans ledit signal détecté et dû notamment au déplacement dudit radar à synthèse d'ouverture de manière à obtenir un signal corrigé ;
- effectuer un traitement de détermination de fréquence à partir dudit signal corrigé, lesdits traitements de focalisation et de détermination de fréquence pouvant être réalisés simultanément à l'aide d'un "traitement de corrélation" (radar à synthèse d'ouverture en "mode glissant") ; et
- effectuer un traitement de transposition destiné à transposer, dans un repère de référence lié audit territoire observé, les résultats obtenus à partir des opérations précédentes et définis dans un repère de distance et de fréquence lié au radar, de manière à former une image radar définie dans ledit repère de référence lié au territoire observé.

Toutefois, un tel radar à synthèse d'ouverture présente l'inconvénient que certaines des opérations citées précédemment, notamment le traitement de focalisation et le traitement de transposition, nécessitent pour leur mise en oeuvre des données de navigation relatives à l'aéronef porteur dudit radar.

Ces données de navigation sont déterminées par des capteurs auxiliaires, intégrés généralement dans une centrale inertielle montée à bord dudit aéronef.

Le radar à synthèse d'ouverture est donc dépendant dans son fonctionnement de moyens externes, et ses mesures peuvent par conséquent être faussées par des erreurs de mesure et/ou des dysfonctionnements de ces moyens externes.

De plus, l'utilisation d'une centrale inertielle présente de nombreux désavantages, en particulier :

- un coût élevé,
- un encombrement important, et
- une fiabilité parfois réduite.

La présente invention a pour objet de remédier à ces inconvénients. Elle concerne un procédé de détection au moyen d'un radar à synthèse d'ouverture, susceptible d'être mis en oeuvre sans utiliser de données de navigation relatives à l'aéronef porteur dudit radar, donc de façon complètement indépendante de capteurs auxiliaires et le cas échéant d'une centrale inertielle.

A cet effet, selon l'invention, ledit procédé présentant les opérations successives précitées est remarquable en ce que :

- on détermine, à l'aide de données obtenues uniquement à partir d'au moins l'une desdites opérations précitées, un gradient Doppler qui est représentatif dudit déphasage perturbateur existant dans le signal détecté ; et
- on utilise le gradient Doppler ainsi déterminé :

  . d'une part, lors dudit traitement de focalisation, pour corriger ledit déphasage perturbateur du signal détecté ; et

. d'autre part, lors dudit traitement de transposition, pour déterminer un repère auxiliaire permettant d'effectuer la transposition dudit repère de distance et de fréquence vers ledit repère de référence, par l'intermédiaire dudit repère auxiliaire.

Ainsi, les traitements nécessitant usuellement des données de navigation, à savoir le traitement de focalisation et le traitement de transposition, sont réalisés selon l'invention en utilisant des données déterminées directement par ledit radar.

Par conséquent, le radar à synthèse d'ouverture mettant en oeuvre le procédé conforme à l'invention est complètement indépendant de moyens externes, notamment d'une centrale inertielle, ce qui permet de remédier aux inconvénients précités.

Dans le cadre de la présente invention, ledit gradient Doppler peut être déterminé de différentes manières.

Dans un premier mode de réalisation, pour déterminer ledit gradient Doppler, on effectue, à partir d'un signal détecté et soumis à un traitement de détermination de distance, les opérations suivantes :

- pour une pluralité de gradients théoriques, de valeurs différentes, choisis arbitrairement, successivement :

    . on effectue un traitement de focalisation, en utilisant le gradient théorique choisi ;
    . on effectue un traitement de détermination de fréquence ; et
    . on mesure le contraste sur une image radar obtenue des traitements précédents, ledit contraste correspondant à l'écart type moyen de l'amplitude du signal détecté sur ladite image radar ;

- on compare les différents contrastes ainsi mesurés ; et
- on choisit, comme gradient Doppler, le gradient théorique pour lequel le contraste est le plus important.

Dans un second mode de réalisation, pour déterminer ledit gradient Doppler $\mu$, on effectue les opérations suivantes :

- on détecte deux signaux, à deux instants différents décalés d'une durée $\Delta T$ ;
- pour chacun desdits signaux préalablement soumis à un traitement de distance, on effectue un traitement de détermination de fréquence ;
- on calcule le décalage fréquentiel $\Delta Fd$ entre les deux images radar obtenues à partir des traitements précédents ; et
- on calcule le gradient Doppler $\mu$ à partir de l'expression :

$$\mu = \frac{\Delta Fd}{\Delta T}$$

De plus, selon l'invention, lors dudit traitement de transposition, pour passer du repère de distance et de fréquence au repère de référence, par l'intermédiaire dudit repère auxiliaire, on effectue les opérations suivantes :

- pour chaque point dudit repère de distance et de fréquence, présentant une fréquence F et une distance D, on détermine le point associé de fréquence Fref et de distance Dref dudit repère auxiliaire, à partir des relations suivantes :

$$\begin{cases} \text{Fref} = F - \int_{\text{tref}}^{\text{t1}} \mu(t)dt \\ \\ \text{Dref} = D + \frac{\lambda}{2} \cdot \text{Fref} \cdot (\text{t1-tref}) + \frac{\lambda}{2} \cdot \int_{\text{tref}}^{\text{t1}} \int_{\text{tref}}^{\text{t}} \mu(\tau)d\tau dt \end{cases}$$

dans lesquelles :

. $\mu(t)$ représente le gradient Doppler déterminé et variant au cours du temps $\underline{t}$ ;
. tref représente la durée entre un instant de référence prédéterminé et l'instant où le repère de distance et de fréquence correspond au repère auxiliaire ;

.    t1 représente la durée entre ledit instant de référence et l'instant de la détection ; et

.    λ représente la longueur d'onde du rayonnement électromagnétique émis ; et

-    pour chaque point de fréquence Fref et de distance Dref ainsi déterminé dudit repère auxiliaire, on détermine le point associé de coordonnées X, Y et Z dudit repère de référence, à partir des relations suivantes :

$$
\begin{cases}
X = (\lambda . Dref . Fref) \; / \; (2 . Vnom) \\
Y = \sqrt{Dref^2 - hnom^2 - X^2} \\
Z = -hnom
\end{cases}
$$

dans lesquelles :

.    Vnom est la vitesse nominale de l'aéronef ; et

.    hnom est l'altitude nominale de l'aéronef.

On notera que l'on utilise la vitesse nominale de l'aéronef, qui est connue, et non la vitesse réelle qui, quant à elle, doit être mesurée par des capteurs appropriés.

Le mode de transposition décrit précédemment est particulièrement avantageux, puisque :

-    il est complètement indépendant de données de navigation ;
-    il peut être mis en oeuvre rapidement et facilement ; et
-    il ne nécessite qu'une double transposition de repères, à la différence des méthodes usuelles qui mettent en oeuvre généralement trois transpositions successives.

La présente invention permet également d'estimer la durée $\Delta t$ entre deux images radar successives, de manière à pouvoir réaliser une carte radar obtenue par la juxtaposition d'une pluralité d'images radar successives.

Selon l'invention, en supposant que la trajectoire de l'aéronef porteur du radar est parabolique entre deux images radar successives, on peut calculer ladite durée $\Delta t$, dans un premier mode de réalisation, à partir de l'expression simplifiée : $\Delta t = B/ |\mu|$

dans laquelle :

-    $\mu$ est le gradient Doppler déterminé ; et
-    B est la largeur de la bande de fréquences traitée pour obtenir une image radar.

En outre, dans l'hypothèse d'une trajectoire quelconque de l'aéronef, ladite durée $\Delta t$ peut être calculée, dans un second mode de réalisation, à partir de l'expression :

$$
B = \left| \; Fmoy(t2+\Delta t) - Fmoy(t2) + \int_{t2}^{t2+\Delta t} \mu(t)dt \; \right|
$$

dans laquelle, de plus :

-    Fmoy représente la fréquence Doppler moyenne de l'image radar considérée ;
-    $\mu(t)$ représente le gradient Doppler déterminé et variant au cours du temps $\underline{t}$ ; et
-    t2 représente un temps de référence relatif à l'instant de détection de la première desdites deux images radar considérées.

Par ailleurs, le procédé conforme à l'invention permet, de plus, de calculer la vitesse d'une cible mobile se déplaçant sur ledit territoire observé.

A cet effet, selon l'invention :

- la vitesse radiale Vr de ladite cible mobile est déterminée à partir de l'expression :

$$Vr = Vnom.cos\alpha c - (\lambda/2).Fc$$

dans laquelle :

. Vnom est la vitesse nominale de l'aéronef ;
. $\lambda$ est la longueur d'onde du rayonnement électromagnétique émis ;
. $\alpha c$ est l'azimut de la cible mobile par rapport à l'aéronef ; et
. Fc est la fréquence Doppler obtenue à partir du rayonnement électromagnétique renvoyé par ladite cible mobile ; et

- la vitesse transversale Vt de ladite cible mobile est déterminée à partir de l'expression :

$$Vt = Vnom.sin\alpha c - \sqrt{(Vnom^2.sin\alpha c^2) + (\lambda.d.\Delta\mu)/2}$$

dans laquelle, de plus :

. $\underline{d}$ est la distance entre la cible mobile et le radar ; et
. $\Delta\mu$ est la différence entre le gradient Doppler associé à la cible mobile et celui associé à un point fixe quelconque du territoire observé.

La présente invention concerne également un radar à synthèse d'ouverture comportant les moyens mentionnés ci-dessus et destiné à la mise en oeuvre du procédé précité.

A cet effet, ledit radar à synthèse d'ouverture est remarquable, selon l'invention, en ce qu'il comporte, en plus des moyens précités, des moyens de calcul pour déterminer, uniquement à partir de données reçues desdits moyens précités intégrés dans le radar, un gradient Doppler qui est représentatif dudit déphasage perturbateur existant dans le signal détecté, lesdits moyens de calcul transmettant le gradient Doppler ainsi déterminé auxdits moyens de focalisation et auxdits moyens de transposition pour leurs traitements.

En outre, de façon avantageuse, ledit radar peut comporter des moyens pour déterminer la vitesse d'une cible mobile se déplaçant sur le territoire observé, en mettant en oeuvre le procédé de détermination de vitesse spécifié précédemment.

Par ailleurs, dans un mode de réalisation particulièrement avantageux de l'invention, ledit radar comporte de plus des moyens pour déterminer la fréquence Doppler moyenne et la distance d'analyse moyenne de la fenêtre d'analyse dudit radar à synthèse d'ouverture.

Ces moyens présentent, notamment, l'avantage :

- de permettre la détermination de la fréquence Doppler moyenne, notamment en vue d'effectuer un centrage autour de ladite fréquence Doppler moyenne, sans utiliser de données de navigation, à la différence des méthodes généralement utilisées ; et
- de permettre le centrage de la fenêtre d'analyse du radar de manière à obtenir des mesures optimales, utilisées notamment par lesdits moyens de calcul, ce qui permet d'augmenter la précision des traitements réalisés conformément à l'invention.

Les figures du dessin annexé feront bien comprendre comment l'invention peut être réalisée. Sur ces figures, des références identiques désignent des éléments semblables.

La figure 1 est le schéma synoptique d'un radar à synthèse d'ouverture conforme à l'invention.

La figure 2 illustre l'illumination d'un territoire par un radar embarqué à bord d'un aéronef qui survole ledit territoire.

La figure 3 est le schéma synoptique de moyens de calcul utilisés dans le radar conforme à l'invention.

La figure 4 illustre la transposition de données d'un repère de distance et de fréquence vers un repère auxiliaire.

La figure 5 illustre la position et la vitesse d'une cible mobile par rapport au radar conforme à l'invention.

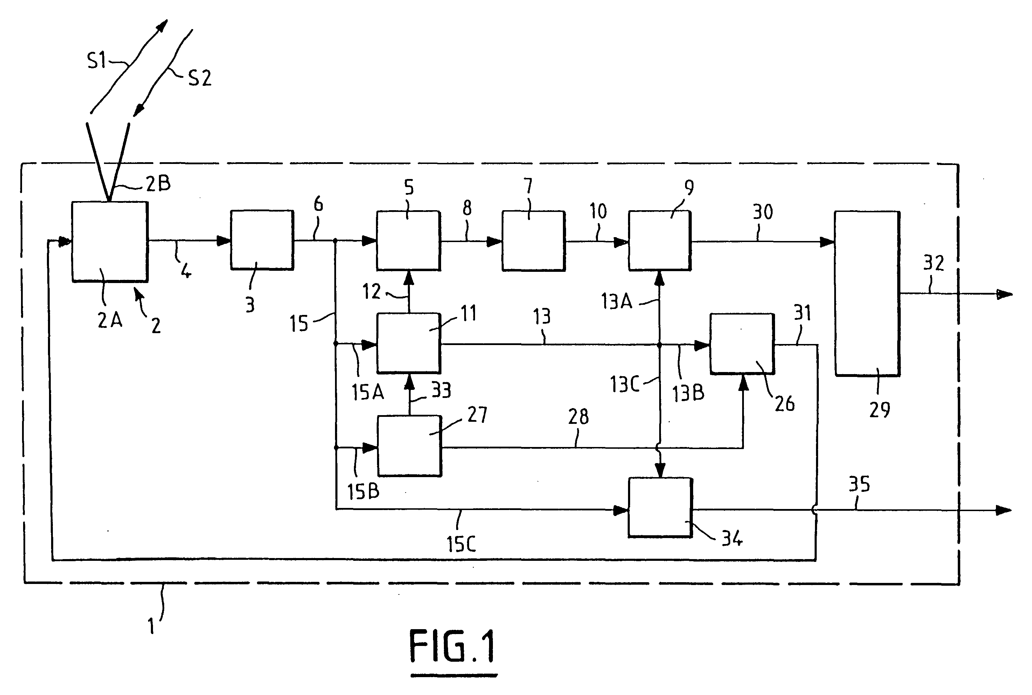

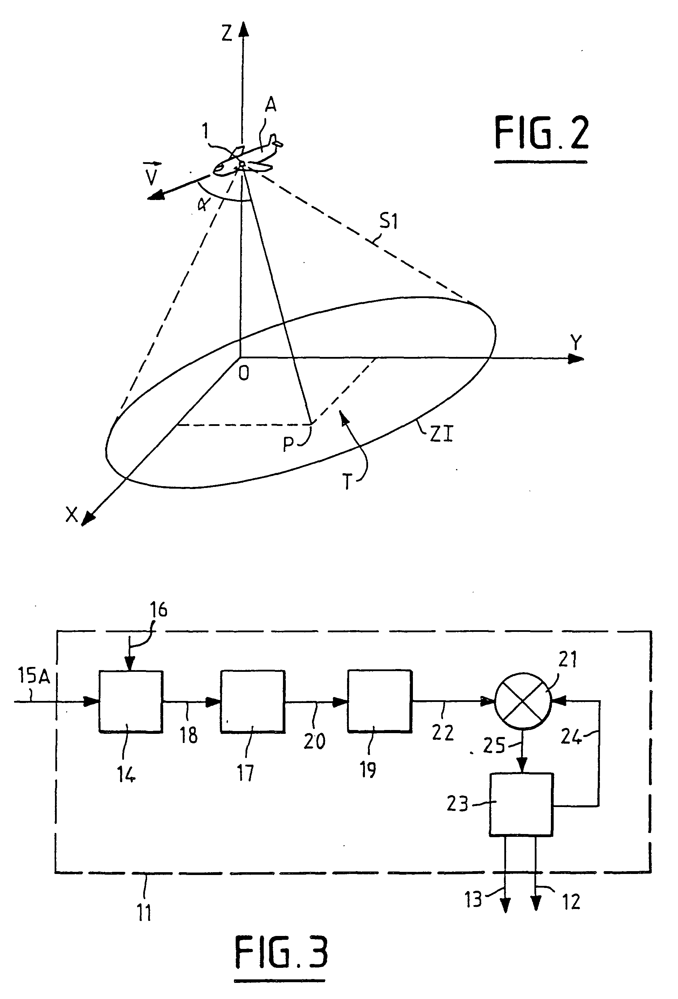

Le radar à synthèse d'ouverture 1 conforme à l'invention et représenté schématiquement sur la figure 1 est monté sur un aéronef A et est utilisé pour observer un territoire T survolé par ledit aéronef A (se déplaçant à une vitesse $\vec{V}$), comme représenté sur la figure 2.

De façon connue, ledit radar à synthèse d'ouverture 1 comporte :

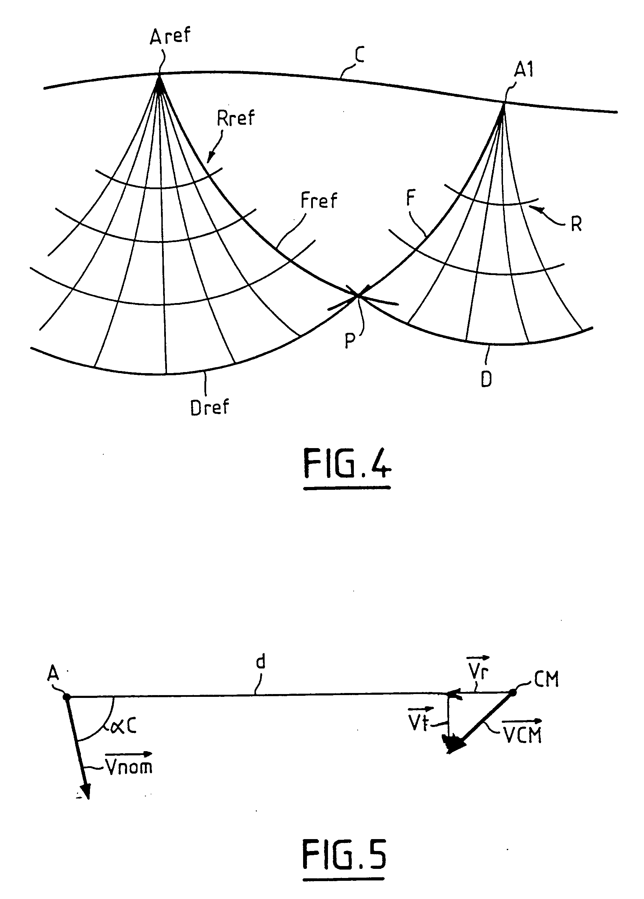

- des moyens 2 pour émettre un rayonnement électromagnétique S1 en direction du territoire survolé T, de manière à illuminer une zone ZI dudit territoire T, comme illustré sur la figure 2 ;
- des moyens 2 pour détecter un signal S2 correspondant audit rayonnement électromagnétique renvoyé par ladite zone ZI illuminée. Lesdits moyens 2 d'émission et de réception sont réalisés, de préférence, sous forme d'un système électronique 2A comportant une antenne 2B d'émission et de réception ;
- des moyens 3 reliés par une liaison 4 auxdits moyens 2 et susceptibles d'effectuer un traitement de détermination de distance, à partir dudit signal détecté S2 ;
- des moyens 5 reliés par une liaison 6 auxdits moyens 3 et susceptibles d'effectuer un traitement de focalisation destiné à corriger un déphasage perturbateur existant dans ledit signal détecté S2 et dû notamment au déplacement dudit radar à synthèse d'ouverture 1 embarqué à bord de l'aéronef A, de manière à obtenir un signal corrigé Sc ;
- des moyens 7 reliés par une liaison 8 auxdits moyens 5 et susceptibles d'effectuer un traitement de détermination de fréquence, à partir dudit signal corrigé Sc ; et
- des moyens 9 reliés par une liaison 10 auxdits moyens 7 et susceptibles d'effectuer un traitement de transposition destiné à transposer, dans un repère de référence OXYZ lié audit territoire T et représenté sur la figure 2, les résultats obtenus à partir des opérations précédentes et définis dans un repère de distance et de fréquence R lié au radar tel que représenté sur la figure 4, de manière à former une image radar définie dans ledit repère de référence OXYZ lié au territoire observé T.

On sait que les radars à synthèse d'ouverture connus utilisent des données de navigation de l'aéronef A porteur du radar pour effectuer certains traitements, et notamment les traitements mis en oeuvre par lesdits moyens 5 et 9.

De façon connue, ces données de navigation sont déterminées par des moyens auxiliaires, externes au radar et équipant ledit aéronef A.

Ceci présente l'inconvénient important que les radars connus sont dépendants de ces moyens auxiliaires et les résultats de la détection peuvent donc être faussés par des erreurs de mesure et/ou des dysfonctionnements de ces moyens auxiliaires.

Le radar à synthèse d'ouverture 1 conforme à l'invention permet de remédier à ces inconvénients.

A cet effet, selon l'invention, ledit radar 1 comporte, de plus, des moyens de calcul 11 pour déterminer, uniquement à partir de données reçues d'au moins certains moyens précédents, par exemple des moyens 3 dans un mode de réalisation particulier décrit ci-dessous, un gradient Doppler qui est représentatif dudit déphasage perturbateur existant dans ledit signal détecté S2, lesdits moyens de calcul 11 étant reliés, respectivement par l'intermédiaire d'une liaison 12 et d'une branche 13A d'une liaison 13, auxdits moyens 5 et 9 pour leur transmettre le gradient Doppler déterminé. Selon l'invention, lesdits moyens 5 et 9 sont formés pour effectuer les traitements nécessaires, uniquement à partir dudit gradient Doppler et non à partir de données de navigation, de la manière décrite ci-dessous.

Dans un mode de réalisation particulièrement avantageux de l'invention, pour déterminer ledit gradient Doppler $\mu$, les moyens de calcul 11 effectuent successivement les opérations :

- ils détectent deux signaux S2, à deux instants différents décalés d'une durée $\Delta T$ ;
- pour chacun desdits signaux préalablement soumis à un traitement de distance, ils effectuent un traitement de détermination de fréquence ;
- ils calculent le décalage fréquentiel $\Delta Fd$ entre les deux images radar obtenues à partir des traitements précédents ; et
- ils calculent le gradient Doppler $\mu$ à partir de l'expression : $\mu = \Delta Fd / \Delta T$.

Dans un autre mode de réalisation avantageux de l'invention, lesdits moyens de calcul 11 comportent, tel que représenté sur la figure 3 :

- un élément de calcul 14 qui est relié par une branche 15A d'une liaison 15 à la liaison 6, c'est-à-dire à la sortie des moyens 3, et qui effectue, à partir des informations reçues desdits moyens 3, des traitements de focalisation précisés ci-dessous, en utilisant à chaque fois l'un d'une pluralité de gradients théoriques, de valeurs différentes, choisis arbitrairement et reçus par une liaison 16. Ledit élément de calcul 14 peut correspondre aux moyens 5 précités ou il peut représenter un élément de calcul indépendant, travaillant selon le même principe que lesdits moyens 5 ;

- un élément de calcul 17 relié par une liaison 18 à l'élément de calcul 14 et effectuant des traitements de détermination de fréquence. De même, ledit élément de calcul 17 peut correspondre aux moyens 7 précités ou il peut représenter un élément de calcul indépendant, travaillant selon le même principe que lesdits moyens 7 ;
- un élément de calcul 19 relié par une liaison 20 à l'élément de calcul 17 et déterminant le contraste sur une image formée et transmise par l'élément de calcul 17, ledit contraste correspondant à l'écart-type moyen de l'amplitude du signal détecté sur ladite image ;
- un comparateur 21 comparant le contraste déterminé par l'élément de calcul 19 et transmis par une liaison 22, à un contraste enregistré dans une mémoire 23 et reçu par une liaison 24 ; et
- ladite mémoire 23 :

  . qui enregistre à chaque fois la valeur du contraste la plus élevée des valeurs comparées par le comparateur 21, reçue par une liaison 25, ainsi que le gradient théorique correspondant ; et
  . qui transmet au comparateur 21 par la liaison 24 pour une comparaison suivante la valeur du contraste ainsi enregistrée.

Lorsque les traitements définis précédemment ont été réalisés pour tous les gradients théoriques choisis arbitrairement, la mémoire 23 transmet, par la liaison 12 et/ou la liaison 13, comme gradient Doppler, le gradient théorique pour lequel le contraste est le plus élevé.

Les moyens 5 et 9 utilisent le gradient Doppler ainsi déterminé dans leurs traitements, tel que précisé ci-dessous.

A cet effet, on rappellera, tout d'abord, que pour un rayonnement électromagnétique émis S1, le radar détecte un signal S2 de phase $\phi(t)$, telle que $\phi(t) = \phi o + 2.\pi.F.t + \pi.\mu.t^2$, dans laquelle :

- $\phi o$ est la phase du signal à un instant de référence de la détection ;
- F est la fréquence Doppler caractéristique de la position angulaire d'un point P correspondant du territoire observé T par rapport au radar 1 ; et
- $\mu$ est le gradient Doppler qui engendre un déphasage perturbateur $\pi.\mu.t^2$ dû au déplacement dudit radar 1 par rapport audit point P.

Pour corriger ce déphasage perturbateur, qui entraîne notamment un flou dans l'image obtenue, les moyens 5 déterminent, lors du traitement de focalisation, un signal corrigé Sc(t) à partir de l'expression :

$$Sc(t) = S2(t).exp(-j.\pi.\mu.t^2)$$

avec :

- S2(t) le signal capté et reçu des moyens 3 ; et
- $\mu$ le gradient Doppler déterminé par les moyens de calcul 11, comme indiqué précédemment.

On notera que les radars à synthèse d'ouverture connus effectuent cette focalisation, c'est-à-dire la correction dudit déphasage perturbateur, en utilisant des données de navigation, à savoir généralement la vitesse et l'accélération radiale de l'aéronef porteur du radar, ce qui n'est pas le cas dans la présente invention.

Quant au traitement de transposition précité, il est réalisé dans les radars connus, en effectuant successivement à l'aide de données de navigation trois transpositions non représentées, à savoir :

- d'abord, dudit repère de distance et de fréquence lié au radar vers un repère orthonormé local, en utilisant notamment la vitesse de l'aéronef ;
- ensuite, dudit repère orthonormé local vers un repère géographique local ; et
- enfin, dudit repère géographique local vers ledit repère de référence lié au territoire survolé.

Conformément à l'invention, les moyens 9 effectuent ledit traitement de transposition de façon simplifiée et sans utiliser de données de navigation.

Pour ce faire, lesdits moyens 9 réalisent :

- d'abord, une transposition du repère de distance et de fréquence R représenté sur la figure 4, vers un repère auxiliaire Rref également représenté sur cette figure 4 ; et
- ensuite, une transposition dudit repère auxiliaire Rref vers ledit repère de référence OXYZ lié à un point O dudit territoire T, comme représenté sur la figure 2.

Selon l'invention, ledit repère auxiliaire Rref correspond au repère de distance et de fréquence à un instant tref (défini par rapport à un temps de référence), et il est défini en fonction de la position de l'aéronef A sur sa trajectoire C à cet instant tref.

Pour expliciter le mode de mise en oeuvre de l'invention, on utilise un repère de distance et de fréquence R quelconque relatif à une position A1 de l'aéronef A sur sa trajectoire C à un instant t1 (également défini par rapport audit temps de référence).

Selon l'invention, pour réaliser la première des deux transpositions précitées, on détermine, pour chaque point P de distance D et de fréquence F du repère R, les coordonnées correspondantes (distance Dref et fréquence Fref) dudit point P dans le repère Rref, à partir des relations suivantes :

$$
\begin{cases}
\text{Fref} = F - \displaystyle\int_{\text{tref}}^{\text{t1}} \mu(t)\,dt \\[2em]
\text{Dref} = D + \dfrac{\lambda}{2}.\text{Fref}.(\text{t1}-\text{tref}) + \dfrac{\lambda}{2}.\displaystyle\int_{\text{tref}}^{\text{t1}} \int_{\text{tref}}^{\text{t}} \mu(\tau)\,d\tau\,dt
\end{cases}
$$

dans lesquelles :

- $\mu(t)$ représente le gradient Doppler déterminé et variant au cours du temps $\underline{t}$ ; et
- $\lambda$ représente la longueur d'onde du rayonnement électromagnétique S1 émis.

Ensuite, pour passer dudit repère Rref vers le repère de référence OXYZ, les moyens 9 déterminent, pour chaque point P (de distance Dref et de fréquence Fref) ainsi caractérisé, ses coordonnées X, Y et Z dans ledit repère de référence OXYZ, à partir des relations suivantes :

$$
\begin{cases}
X = (\lambda.\text{Dref}.\text{Fref}) / (2.\text{Vnom}) \\[0.8em]
Y = \sqrt{\text{Dref}^2 - \text{hnom}^2 - X^2} \\[0.8em]
Z = -\text{hnom}
\end{cases}
$$

dans lesquelles :

- Vnom est la vitesse nominale de l'aéronef A ; et
- hnom est l'altitude nominale de l'aéronef A.

Comme indiqué précédemment, lesdits moyens 9 forment ainsi une image radar d'une partie du territoire survolé.

De façon connue, pour réaliser une carte radar qui est obtenue par la juxtaposition d'une pluralité de telles images radar, généralement réalisées sous forme de bandes imagées, il est nécessaire de connaître la durée réelle $\Delta t$ entre deux images radar successives, pour pouvoir effectuer une juxtaposition précise.

Selon l'invention, le radar 1 comporte des moyens 26 reliés aux moyens 11 par une branche 13B de la liaison 13 et susceptibles de calculer ladite durée $\Delta t$, sans utiliser de données de navigation, au contraire des radars connus, et de transmettre ladite durée $\Delta t$ aux moyens 2, par l'intermédiaire d'une liaison 31, afin d'élaborer l'image radar suivante.

A cet effet, lesdits moyens 26 déterminent ladite durée $\Delta t$ :

- dans un premier mode de réalisation, en supposant que la trajectoire C de l'aéronef A est parabolique entre les deux images radar successives considérées, à partir de l'expression simplifiée $\Delta t = B/|\mu|$

dans laquelle :

- μ est le gradient Doppler déterminé ; et
- B est la largeur de la bande de fréquences traitée pour obtenir une image radar ; et

- dans un second mode de réalisation, pour une trajectoire C quelconque de l'aéronef A, à partir de l'expression :

$$B = \left| \; Fmoy(t2+\Delta t) - Fmoy(t2) + \int_{t2}^{t2+\Delta t} \mu(t)dt \; \right|$$

dans laquelle :
- Fmoy représente une fréquence Doppler moyenne de l'image radar considérée, qui est déterminée par des moyens 27 précisés ci-dessous et qui est transmise aux moyens 26 par une liaison 28 ;
- μ(t) représente le gradient Doppler déterminé et variant au cours du temps t ; et
- t2 représente un temps de référence relatif à l'instant de détection de la première desdites deux images radar.

Par ailleurs, le radar 1 comporte des moyens 29 qui reçoivent les images radar des moyens 9 par l'intermédiaire d'une liaison 30, et qui déterminent une carte radar qu'ils peuvent transmettre à un dispositif utilisateur non représenté par une liaison 32.

Dans un mode de réalisation avantageux de l'invention, lesdits moyens 27 sont formés de manière à déterminer, en plus de la fréquence Doppler moyenne précitée, également la distance d'analyse moyenne de la fenêtre d'analyse du radar 1, ce qui permet de centrer ladite fenêtre d'analyse de manière à obtenir des mesures optimales, susceptibles notamment d'être transmises aux moyens de calcul 11 (par une liaison 33). Ce mode de réalisation permet donc d'augmenter la précision des traitement effectués.

De préférence, lesdits moyens 27 sont du type de ceux divulgués dans la demande de brevet français 95 07199 précitée.

Par ailleurs, le radar 1 comporte des moyens 34 reliés à une branche 15C de la liaison 15 et susceptibles de déterminer, de plus, la vitesse $\overrightarrow{VCM}$ d'une cible mobile CM se déplaçant sur le territoire observé T.

Ladite vitesse $\overrightarrow{VCM}$ est formée d'une vitesse transversale $\overrightarrow{Vt}$ et d'une vitesse radiale $\overrightarrow{Vr}$, tel que représenté sur la figure 5 qui est une vue du dessus, correspondant à la projection orthogonale des différents vecteurs dans le plan du sol (avec comme vitesse de l'aéronef, la vitesse nominale $\overrightarrow{Vnom}$).

Selon l'invention, les moyens 34 déterminent :

- ladite vitesse radiale Vr, à partir de l'expression :

$$Vr = Vnom.\cos\alpha c - (\lambda/2).Fc$$

dans laquelle :

- λ est la longueur d'onde du rayonnement électromagnétique S1 émis par l'antenne 2B ;
- αc est l'azimut de la cible mobile CM par rapport audit radar 1 ; et
- Fc est la fréquence Doppler obtenue à partir du rayonnement électromagnétique S2 renvoyé par ladite cible mobile CM ; et

- ladite vitesse transversale Vt, à partir de l'expression :

$$Vt = Vnom.\sin\alpha c - \sqrt{(Vnom^2.\sin\alpha c^2) + (\lambda.d.\Delta\mu)/2}$$

dans laquelle :

- d est la distance entre la cible mobile CM et le radar 1 (ou l'aéronef A) ; et
- Δμ est la différence entre le gradient Doppler associé à la cible mobile CM et celui associé à un point fixe quelconque du territoire observé, par exemple le point P d'azimut α de la figure 1.

Lesdits moyens 34 peuvent transmettre les vitesses ainsi déterminées (par exemple après les avoir transposées dans le repère de référence OXYZ) à un dispositif utilisateur non représenté, par une liaison 35.

**Revendications**

**1.** Procédé de détection au moyen d'un radar à synthèse d'ouverture (1), embarqué à bord d'un aéronef (A) et observant un territoire survolé (T), procédé selon lequel on effectue les opérations suivantes :

- on émet un rayonnement électromagnétique (S1) en direction dudit territoire survolé (T) ;
- on détecte un signal (S2) correspondant audit rayonnement électromagnétique renvoyé par ledit territoire survolé ;
- on effectue un traitement de détermination de distance, à partir dudit signal détecté (S2) ;
- on effectue un traitement de focalisation destiné à corriger un déphasage perturbateur existant dans ledit signal détecté et dû notamment au déplacement dudit radar à synthèse d'ouverture de manière à obtenir un signal corrigé ;
- on effectue un traitement de détermination de fréquence, à partir dudit signal corrigé ; et
- on effectue un traitement de transposition destiné à transposer, dans un repère de référence (OXYZ) lié audit territoire observé, les résultats obtenus à partir des opérations précédentes et définis dans un repère de distance et de fréquence (R) lié au radar (1), de manière à former une image radar définie dans ledit repère de référence (OXYZ) lié au territoire observé,

  **caractérisé en ce que** :

- on détermine, à l'aide de données obtenues uniquement à partir d'au moins l'une des opérations précédentes, un gradient Doppler qui est représentatif dudit déphasage perturbateur existant dans le signal détecté ; et
- on utilise le gradient Doppler ainsi déterminé :

  . d'une part, lors dudit traitement de focalisation, pour corriger ledit déphasage perturbateur du signal détecté (S2) ; et
  . d'autre part, lors dudit traitement de transposition, pour déterminer un repère auxiliaire (Rref) permettant d'effectuer la transposition dudit repère de distance et de fréquence (R) vers ledit repère de référence (OXYZ), par l'intermédiaire dudit repère auxiliaire (Rref); et

- lors dudit traitement de transposition, pour passer du repère de distance et de fréquence (R) au repère de référence (OXYZ), par l'intermédiaire dudit repère auxiliaire (Rref), on effectue les opérations suivantes :

  ➤ pour chaque point (P) dudit repère de distance et de fréquence (R), présentant une fréquence F et une distance D, on détermine le point associé de fréquence Fref et de distance Dref dudit repère auxiliaire (Rref), à partir des relations suivantes :

$$\begin{cases} Fref = F - \int_{tref}^{t1} \mu(t)dt \\ Dref = d + \frac{\lambda}{2}.Fref.(t1 - tref) + \frac{\lambda}{2}.\int_{tref}^{t1} \int_{tref}^{t} \mu(\tau)d\tau dt \end{cases}$$

  dans lesquelles :

  . $\mu(t)$ représente le gradient Doppler déterminé et variant au cours du temps $\underline{t}$ ;
  . tref représente la durée entre un instant de référence prédéterminé et l'instant où le repère de distance et de fréquence correspond au repère auxiliaire ;
  . t1 représente la durée entre ledit instant de référence et l'instant de la détection ; et
  . $\lambda$ représente la longueur d'onde du rayonnement electromagnétique (S1) émis ; et

  ➤ pour chaque point de fréquerice Fref et de distance Dref ainsi déterminé dudit repère auxiliaire (Rref), on détermine le point associé de coordonnées X, Y et Z dudit repère de référence (OXYZ), à partir des relations suivantes :

$$X = (\lambda.Dref.Fref) / (2.Vnom)$$

$$Y = \sqrt{Dref^2 - hnom^2 - X^2}$$

$$Z = - hnom$$

dans lesquelles :

- . Vnom est la vitesse nominale de l'aéronef (A) ; et
- . hnom est l'altitude nominale de l'aéronef (A).

**2.** Procédé selon la revendication 1,
**caractérisé en ce que**, pour déterminer ledit gradient Doppler, on effectue à partir d'un signal détecté et soumis à un traitement de détermination de distance, les opérations suivantes :

- pour une pluralité de gradients théoriques, de valeurs différentes, choisis arbitrairement, successivement :

  - . on effectue un traitement de focalisation, en utilisant le gradient théorique choisi ;
  - . on effectue un traitement de détermination de fréquence ; et
  - . on mesure le contraste sur une image radar obtenue à partir des traitements précédents, ledit contraste correspondant à l'écart type moyen de l'amplitude du signal détecté sur ladite image radar ;

- on compare les différents contrastes ainsi mesurés ; et
- on choisit, comme gradient Doppler, le gradient théorique pour lequel le contraste est le plus important.

**3.** Procédé selon la revendication 1,
**caractérisé en ce que**, pour déterminer ledit gradient Doppler $\mu$, on effectue les opérations suivantes :

- on détecte deux signaux (S2), à deux instants différents décalés d'une durée $\Delta T$ ;
- pour chacun desdits signaux préalablement soumis à un traitement de détermination de distance, on effectue un traitement de détermination de la fréquence Doppler ;
- on calcule le décalage fréquentiel $\Delta Fd$ entre les deux signaux radar obtenus à partir des traitements précédents ; et
- on calcule le gradient Doppler $\mu$ à partir de l'expression :

$$\mu = \frac{\Delta Fd}{\Delta T}$$

**4.** Procédé selon l'une quelconque des revendications précédentes, pour estimer la durée $\Delta t$ entre deux images radar successives, de manière à pouvoir réaliser une carte radar obtenue par la juxtaposition d'une pluralité d'images radar successives,
**caractérisé en ce que** la trajectoire de l'aéronef est parabolique entre lesdites deux images radar successives et **en ce que** ladite durée $\Delta t$ est calculée à partir de l'expression simplifiée : $\Delta t = B/|\mu|$
dans laquelle :

- $\mu$ est le gradient Doppler déterminé ; et
- B est la largeur de la bande de fréquences traitée pour obtenir une image radar.

**5.** Procédé selon l'une quelconque des revendications 1 à 3, pour estimer la durée $\Delta t$ entre deux images radar successives, de manière à pouvoir réaliser une carte radar obtenue par la juxtaposition d'une pluralité d'images radar successives,
**caractérisé en ce que** ladite durée $\Delta t$ est calculée à partir de l'expression :

$$B = | \text{Fmoy}(t2 + \Delta t) - \text{Fmoy}(t2) + \int_{t2}^{t2+\Delta t} \mu(t)dt |$$

dans laquelle :

- B représente la largeur de la bande de fréquences traitée pour obtenir une image radar ;
- Fmoy représente la fréquence Doppler moyenne de l'image radar considérée ;
- $\mu(t)$ représente le gradient Doppler déterminé et variant au cours du temps $\underline{t}$; et
- t2 représente un temps de référence relatif à l'instant de détection de la première desdites deux images radar considérées.

6. Procédé selon l'une quelconque des revendications précédentes, permettant de plus de calculer la vitesse d'une cible mobile (CM) se déplaçant sur ledit territoire observé,
   **caractérisé en ce que** :

   - la vitesse radiale Vr de ladite cible mobile (CM) est déterminée à partir de l'expression :

$$Vr = Vnom.\cos\alpha c - (\lambda/2).Fc$$

   dans laquelle :

   - Vnom est la vitesse nominale de l'aéronef (A) ;
   - $\lambda$ est la longueur d'onde du rayonnement électromagnétique (S1) émis ;
   - $\alpha c$ est l'azimut de là cible mobile (CM) par rapport à l'aéronef (A) ; et
   - Fc est la fréquence Doppler obtenue à partir du rayonnement électromagnétique (S2) renvoyé par ladite cible mobile (CM) ; et

   - la vitesse transversale Vt de ladite cible mobile (CM) est déterminée à partir de l'expression :

$$Vt = Vnom.\sin\alpha c - \sqrt{(Vnom^2.\sin\alpha c^2)+(\lambda.d.\Delta\mu)/2}$$

   dans laquelle :

   - $\underline{d}$ est la distance entre la cible mobile (CM) et le radar ; et
   - $\Delta\mu$ est la différence entre le gradient Doppler associé à la cible mobile et celui associé à un point fixe quelconque du territoire observé.

7. Radar à synthèse d'ouverture pour la mise en oeuvre du procédé spécifié sous l'une quelconque des revendications 1 à 6, comportant :

   - des moyens (2) pour émettre un rayonnement électromagnétique (S1) en direction d'un territoire survolé (T) par l'aéronef (A) porteur dudit radar ;
   - des moyens (2) pour détecter un signal (S2) correspondant audit rayonnement électromagnétique renvoyé par ledit territoire survolé et observé ;
   - des moyens (3) pour effectuer un traitement de détermination de distance, à partir dudit signal détecté (S2) ;
   - des moyens (5) pour effectuer un traitement de focalisation destiné à corriger un déphasage perturbateur existant dans ledit signal détecté (S2) et dû notamment au déplacement dudit radar à synthèse d'ouverture de manière à obtenir un signal corrigé ;
   - des moyens (7) pour effectuer un traitement de détermination de fréquence, à partir dudit signal corrigé et
   - des moyens (9) pour effectuer un traitement de transposition destiné à transposer, dans un repère de référence (OXYZ) lié audit territoire observé (T), les résultats obtenus à partir des opérations précédentes et définis dans un repère de distance et de fréquence (R) lié au radar, de manière à former une image radar définie dans ledit repère de référence (OXYZ) lié au territoire observé,

**caractérisé en ce qu'**il comporte de plus des moyens de calcul (11) pour déterminer, uniquement à partir de données reçues des moyens précédents, un gradient Doppler qui est représentatif dudit déphasage perturbateur existant dans le signal détecté (S2), lesdits moyens de calcul (11) transmettant le gradient Doppler déterminé auxdits moyens de focalisation (5) et auxdits moyens de transposition (9) pour leurs traitements, et **en ce que** lesdits moyens de transposition (9) effectuent la transposition par l'intermédiaire d'un repère auxiliaire (Rref), qui est déterminé à l'aide dudit gradient Doppler.

**8.** Radar à synthèse d'ouverture selon la revendication 7,
**caractérisé en ce qu'**il comporte des moyens (34) pour déterminer la vitesse d'une cible mobile (CM) se déplaçant sur le territoire observé, en mettant en oeuvre le procédé spécifié sous la revendication 6.


**Patentansprüche**

**1.** Verfahren zur Erfassung mittels eines Öffnungssyntheseradars (1), das sich an Bord eines Flugzeugs (A) befindet und ein überflogenes Gelände (T) beobachtet, ein Verfahren, nach dem folgende Operationen ausgeführt werden:

- es wird eine elektromagnetische Strahlung (S1) in Richtung des genannten überflogenen Geländes (T) ausgesendet;
- es wird ein Signal (S2) erfasst, das der genannten elektromagnetischen Strahlung entspricht, die vom genannten überflogenen Gelände zurückgesandt wird;
- es erfolgt eine Verarbeitung zur Entfernungsermittlung auf der Grundlage des genannten erfassten Signals (S2);
- es wird eine Fokussierungsverarbeitung zur Korrektur der störenden Phasenverschiebung durchgeführt, die in dem genannten erfassten Signal vorliegt und insbesondere auf die Verschiebung des genannten Öffnungssyntheseradars zurückzuführen ist, um ein korrigiertes Signal zu erhalten;
- es wird eine Verarbeitung zur Frequenzermittlung auf der Grundlage des genannten korrigierten Signals durchgeführt; und
- es erfolgt eine Umsetzungsverarbeitung, die dazu dient, die Ergebnisse in ein mit dem beobachteten Gelände verbundenes Bezugszeichen (OXYZ) umzusetzen, die man auf der Grundlage der vorstehenden Operationen erhalten hat und die in einem mit dem Radar (1) verbundenen Entfernungs- und Frequenzzeichen (R ) definiert sind, so dass ein Radarbild erzeugt wird, das im mit dem beobachteten Gelände verbundenen Bezugszeichen (OXYZ) definiert ist,

**dadurch gekennzeichnet, dass**

- mit Hilfe von Daten, die man ausschließlich auf der Grundlage von mindestens einer der vorgenannten Operationen erhalten hat, einen Doppler-Gradienten ermittelt wird, der repräsentativ ist für die genannte störende Phasenverschiebung im erfassten Signal, und
- man den so ermittelten Doppler-Gradienten

  • zum einen während der genannten Fokussierungsverarbeitung verwendet, um die genannte störende Phasenverschiebung des erfassten Signals (S2) zu korrigieren, und
  • zum anderen während der genannten Umsetzungsverarbeitung verwendet, um ein Hilfszeichen (Rref) zu ermitteln, das es ermöglicht, die Umsetzung des genannten Entfernungs- und Frequenzzeichens (R) mittels des genannten Hilfszeichens (Rref) zum genannten Bezugszeichen (OXYZ) vorzunehmen, und

- während der genannten Umsetzungsverarbeitung, um mittels des genannten Hilfszeichens (Rref) vom Entfernungs- und Frequenzzeichen (R) zum Bezugszeichen zu gehen, werden folgende Operationen ausgeführt:
- für jeden Punkt (P) des genannten Entfernungs- und Frequenzzeichens (R), der eine Frequenz F und eine Entfernung D aufweist, wird der der Frequenz Fref und der Entfernung Dref des genannten Hilfszeichens (Rref) zugeordnete Punkt ausgehend von den folgenden Relationen berechnet:

$$( Fref = F - \int_{tref}^{t1} \mu(t)\,dt$$

$$( \; Dref = D + \frac{\lambda}{2} \cdot Fref \cdot (t1 - tref) + \frac{\lambda}{2} \cdot \int_{tref}^{t1} \int_{tref}^{t} \mu(\tau)d\tau dt$$

in denen:

- $\mu(t)$ den ermittelten Doppler-Gradienten darstellt, der sich im Laufe der Zeit $t$ ändert;
- tref die Dauer zwischen eine vorher bestimmten Bezugszeitpunkt und dem Zeitpunkt darstellt, zu dem das Entfernungs- und Frequenzzeichen dem Hilfszeichen entspricht;
- t1 die Dauer zwischen dem genannten Bezugszeitpunkt und dem Zeitpunkt der Erfassung darstellt; und
- $\lambda$ die Wellenlänge der ausgesandten elektromagnetischen Strahlung (S1) darstellt; und

- für jeden so ermittelten Frequenzpunkt Fref und Entfemungspunkt Dref des genannten Hilfszeichens (Rref) wird der zugeordnete Punkt der Koordinaten X, Y und Z des genannten Bezugszeichens (OXYZ) ausgehend von den folgenden Relationen berechnet:

$$( X = (\lambda \cdot Dref \cdot Fref)/(2 \cdot Vnenn)$$

$$( Y = \sqrt{Dref^2 \text{-} hnenn^2 - X^2}$$

$$( Z = \text{-} hnenn,$$

in denen :

- Vnenn die Nenngeschwindigkeit des Flugzeugs (A) und
- hnenn die Nennhöhe des Flugzeugs (A) ist.

2. Verfahren gemäß Anspruch 1,
   **dadurch gekennzeichnet, dass** zur Ermittlung des genannten Doppler-Gradienten ausgehend von einem erfassten Signal, das einer Verarbeitung zur Entfemungsermittlung unterzogen wurde, folgende Operationen durchgeführt werden:

   - bei einer Vielzahl willkürlich gewählter, theoretischer Gradienten von unterschiedlichem Wert wird nacheinander

     - eine Fokussierungsverarbeitung unter Verwendung des gewählten Gradienten durchgeführt;
     - eine Frequenzermittlungsverarbeitung durchgeführt und
     - der Kontrast an einem Radarbild gemessen, das man aus den vorhergehenden Verarbeitungen erhalten hat, wobei der genannte Kontrast dem mittleren quadratischen Fehler der Amplitude des auf dem genannten Radarbild erfassten Signals entspricht;

   - es werden die verschiedenen so gemessenen Kontraste verglichen und
   - als Doppler-Gradient wird der theoretische Gradient gewählt, für den der Kontrast am größten ist.

3. Verfahren gemäß Anspruch 1,
   **dadurch gekennzeichnet, dass** zur Ermittlung des genannten Doppler-Gradienten $\mu$ folgende Operationen ausgeführt werden:

   - zu zwei verschiedenen, um eine Dauer $\Delta T$ verschobenen Zeitpunkten werden zwei Signale (S2) erfasst;
   - für jedes der beiden vorher einer Entfernungsverarbeitung unterzogenen Signale wird eine Verarbeitung zur Doppler-Frequenzermittlung durchgeführt;
   - es wird die Frequenzverschiebung $\Delta Fd$ zwischen den beiden aus den vorhergehenden Verarbeitungsvorgänge erhaltenen Radarbildern berechnet und
   - es wird der Doppler-Gradient $\mu$ auf der Grundlage des folgenden Ausdrucks berechnet:

$$\mu = \frac{\Delta Fd}{\Delta T}$$

**4.** Verfahren gemäß einem beliebigen der vorstehenden Ansprüche zur Schätzung der Dauer $\Delta t$ zwischen zwei aufeinanderfolgenden Radarbildern, so dass eine Radarkarte erstellt werden kann, die man durch Nebeneinanderlegen von mehreren aufeinanderfolgenden Radarbildern erhält,
**dadurch gekennzeichnet, dass** die Flugbahn des Flugzeugs zwischen den genannten beiden aufeinanderfolgenden Radarbildern parabelförmig ist, sowie dadurch, dass die genannte Dauer $\Delta t$ auf der Grundlage des vereinfachten Ausdrucks: $\Delta t = B/|\mu|$ berechnet wird, in dem

- $\mu$ der ermittelte Dopplergradient ist und
- B die Breite des zum Erhalt eines Radarbilds verarbeiteten Frequenzbandes ist.

**5.** Verfahren gemäß einem beliebigen der Ansprüche 1 bis 3 zur Schätzung der Dauer $\Delta t$ zwischen zwei aufeinanderfolgenden Radarbildern, so dass eine Radarkarte erstellt werden kann, die man durch Nebeneinanderlegen von mehreren aufeinanderfolgenden Radarbildern erhält,
**dadurch gekennzeichnet, dass** die genannte Dauer $\Delta t$ auf der Grundlage des Ausdrucks:

$$B = \left| Fmittl(t2 + \Delta t) - Fmittl(t2) + \int_{t2}^{t2+\Delta t} \mu(t)dt \right|,$$

berechnet wird,
in dem

- B die Breite des Frequenzbandes darstellt, das verarbeitet wird, um ein Radarbild zu erhalten;
- Fmittl die mittlere Dopplerfrequenz des betrachteten Radarbilds darstellt;
- $\mu(t)$ den ermittelten Doppler-Gradienten, der sich im Laufe der Zeit $t$ ändert, darstellt und
- t2 eine Bezugszeit hinsichtlich des Zeitpunkts der Erfassung des ersten der genannten beiden betrachteten Radarbilder darstellt.

**6.** Verfahren gemäß einem beliebigen der vorstehenden Ansprüche, das es weiterhin ermöglicht, die Geschwindigkeit eines beweglichen Ziels (CM), das sich auf dem beobachteten Gelände bewegt, zu berechnen,
**dadurch gekennzeichnet, dass**

- die Radialgeschwindigkeit Vr des genannten beweglichen Ziels (CM) auf der Grundlage des folgenden Ausdrucks ermittelt wird:

$$Vr = Vnenn \cdot \cos\alpha c - (\lambda/2) \cdot Fc,$$

in dem

- Vnenn die Nenngeschwindigkeit des Flugzeugs (A) ist;
- $\lambda$ die Wellenlänge der ausgesandten elektromagnetischen Strahlung (S1) ist;
- $\alpha c$ der Azimut des beweglichen Ziels (CM) in Bezug auf das Flugzeug (A) ist; und
- Fc die ausgehend von der vom genannten beweglichen Ziel (CM) zurückgesandten elektromagnetischen Strahlung (S2) erhaltenen Dopplerfrequenz ist; und

- die Quergeschwindigkeit Vt des genannten beweglichen Ziels (CM) auf der Grundlage des folgenden Ausdrucks ermittelt wird:

$$Vt = Vnenn \cdot \sin\alpha c - \sqrt{(Vnenn^2 \cdot \sin\alpha c^2) + (\lambda \cdot d \cdot \Delta\mu)/2},$$

in der

- • <u>d</u> die Entfernung zwischen dem beweglichen Ziel (CM) und dem Radar ist, und
- • Δμ die Differenz zwischen dem dem beweglichen Ziel zugeordneten Doppler-Gradienten und dem Doppler-Gradienten ist, der einem beliebigen Festpunkt des beobachteten Geländes zugeordnet ist.

**7.** Öffnungssyntheseradar zur Anwendung des unter einem beliebigen der Ansprüche 1 bis 6 spezifizierten Verfahrens, das folgendes umfasst:

- Mittel (2), um eine elektromagnetische Strahlung (S1) in Richtung des vom Trägerflugzeug (A) des genannten Radars überflogenen Geländes (T) auszusenden,
- Mittel (2) zur Erfassung eines Signals (S2), das der genannten elektromagnetischen Strahlung entspricht, die vom genannten überflogenen und beobachteten Gelände zurückgesandt wird;
- Mittel (3) zur Durchführung einer Verarbeitung zur Entfernungsermittlung auf der Grundlage des genannten erfassten Signals (S2);
- Mittel (5) zur Durchführung einer Fokussierungsverarbeitung, um eine störende Phasenverschiebung, die im erfassten Signal (S2) vorliegt und insbesondere auf die Bewegung des genannten Öffnungssyntheseradars zurückzuführen ist, zu korrigieren, um ein korrigiertes Signal zu erhalten;
- Mittel (7) zur Durchführung einer Verarbeitung zur Frequenzermittlung auf der Grundlage des genannten korrigierten Signals, und
- Mittel (9) zur Durchführung einer Umsetzungsverarbeitung, die dazu dient, die aus den vorhergehenden Operationen erhaltenen und in einem mit dem Radar verbundenen Entfemungs- und Frequenzzeichen (R) definierten Ergebnisse in ein Bezugszeichen (OXYZ) umzusetzen, das mit dem genannten Gelände (T) verbunden ist, so dass ein Radarbild erzeugt wird, das im genannten, mit dem beobachteten Gelände (T) verbundenen Bezugszeichen (OXYZ) definiert ist,
- **dadurch gekennzeichnet, dass** es weiterhin Rechenmittel (11) umfasst, um ausschließlich auf der Grundlage von von den vorstehenden Mitteln erhaltenen Angaben einen Doppler-Gradienten zu ermitteln, der repräsentativ für die genannte störende Phasenverschiebung im erfassten Signal (S2) ist, wobei die genannten Rechenmittel (11) den ermittelten Doppler-Gradienten zu seiner Verarbeitung zu den genannten Fokussierungsmitteln (5) sowie zu den genannten Umsetzungsmitteln (9) übertragen, und dadurch, dass die genannten Umsetzungsmittel (9) die Umsetzung mittels eines Hilfszeichens (Rref), das mit Hilfe des genannten Doppler-Gradienten ermittelt wird, ausführen.

**8.** Öffnungssyntheseradar gemäß Anspruch 7, **dadurch gekennzeichnet, dass** es Mittel (34) zur Ermittlung der Geschwindigkeit eines beweglichen Ziels (CM) umfasst, die sich auf dem beobachteten Gelände bewegen, wobei das unter Anspruch 6 spezifiziert Verfahren angewandt wird.

**Claims**

**1.** Detection method, using a synthetic aperture radar (1) on board an aircraft (A) and observing an overflown territory (T), wherein the following operations are effected:

- electromagnetic radiation (S1) is transmitted towards said overflown territory (T);
- a signal (S2) corresponding to said electromagnetic radiation reflected by said overflown territory is detected;
- a distance determination processing operation is carried out on said detected signal (S2);
- a focusing processing operation is carried out to correct an unwanted phase-shift in said detected signal and due notably to the displacement of said synthetic aperture radar, in order to obtain a corrected signal;
- a frequency determination processing operation is carried out on said corrected signal; and
- a transposition processing operation is carried out in order to transpose, into a reference frame of reference (OXYZ) tied to said observed territory, the results obtained from the previous operations and defined in a distance and frequency frame of reference (R) tied to the radar (1), in order to form a radar image defined in said reference frame of reference (OXYZ) tied to the observed territory,

    **characterised in that**:

- using data obtained exclusively from at least one of the preceding operations, a Doppler gradient is determined that is representative of said unwanted phase-shift in the detected signal; and
- the Doppler gradient determined in this way is used:

.  on the one hand, during said focusing processing operation, to correct said unwanted phase-shift of the detected signal (S2); and

.  on the other hand, during said transposition processing operation, to determine an auxiliary frame of reference (Rref) enabling the transposition from said distance and frequency frame of reference (R) to said reference frame of reference (OXYZ) by way of said auxiliary frame of reference (Rref) and

-  during said transposition processing operation, in order to transpose from the distance and frequency frame of reference (R) to the reference frame of reference (OXYZ) by way of said auxiliary frame of reference (Rref), the following operations are carried out:

-  for each point (P) of said distance and frequency frame of reference (R), having a frequency F and a distance D, the associated point having a frequency Fref and a distance Dref of said auxiliary frame of reference (Rref) is determined from the following equations:

$$
\begin{cases}
\mathrm{Fref} = \mathrm{F} - \displaystyle\int_{\mathrm{tref}}^{\mathrm{t1}} \mu(t)\,dt \\[2em]
\mathrm{Dref} = \mathrm{D} + \dfrac{\lambda}{2}.\mathrm{Fref}.(\mathrm{t1-tref}) + \dfrac{\lambda}{2}.\displaystyle\int_{\mathrm{tref}}^{\mathrm{t1}}\int_{\mathrm{tref}}^{\mathrm{t}} \mu(\tau)\,d\tau\,dt
\end{cases}
$$

in which :

.  $\mu(t)$ represents the Doppler gradient determined and varying with time $\underline{t}$;

.  tref represents the time between a predetermined reference time and the time at which the distance and frequency frame of reference corresponds to the auxiliary frame of reference;

.  t1 represents the time between said reference time and the detection time; and

.  $\lambda$ represents the wavelength of the electromagnetic radiation (S1) transmitted; and

-  for each point having a frequency Fref and a distance Dref determined in this way of said auxiliary frame of reference (Rref), the associated point with coordinates X, Y and Z of said reference frame of reference (OXYZ) is determined from the following equations:

$$X = (\lambda.\mathrm{Dref}.\mathrm{Fref}) / (2.\mathrm{Vnom})$$

$$Y = \sqrt{\mathrm{Dref}^2 - \mathrm{hnom}^2 - X^2}$$

$$Z = -\mathrm{hnom}$$

in which:

.  Vnom is the nominal speed of the aircraft (A); and

.  hnom is the nominal altitude of the aircraft (A).

2.  Method according to claim 1,
**characterised in that**, in order to determine said Doppler gradient, the following operations are carried out on a detected signal subjected to a distance determination processing operation:

-  successively for a plurality of different theoretical gradient values chosen arbitrarily:

.  a focusing processing operation is carried out using the chosen theoretical gradient;

.  a frequency determination processing operation is carried out; and

.  the contrast is measured on a radar image obtained from the previous processing operations, said contrast corresponding to the mean standard deviation of the amplitude of the detected signal over said radar image;

- the various contrasts measured in this way are compared; and
- the Doppler gradient chosen is the theoretical gradient for which the contrast is the highest.

3. Method according to claim 1,
**characterised in that**, in order to determine said Doppler gradient μ, the following operations are carried out:

- two signals (S2) are detected at two different times separated by a time ΔT;
- for each of said signals previously subjected to a distance processing operation, a Doppler frequency determination processing operation is carried out;
- the frequency shift ΔFd between the two radar signals obtained from the previous processing operations is calculated; and
- the Doppler gradient μ is calculated from the expression:

$$\mu = \frac{\Delta Fd}{\Delta T}$$

4. Method according to any one of the preceding claims for estimating the time Δt between two successive radar images in order to be able to form a radar map by juxtaposing a plurality of successive radar images,
**characterised in that** the trajectory of the aircraft is parabolic between said two successive radar images and **in that** said time Δt is calculated from the simplified expression: Δt = B/|μ|
in which:

- μ is the Doppler gradient determined; and
- B is the width of the frequency band processed to obtain a radar image.

5. Method according to any one of claims 1 to 3, for estimating the time Δt between two successive radar images, in order to be able to form a radar map by juxtaposing a plurality of successive radar images,
**characterised in that** said time Δt is calculated from the expression:

$$B = \left| Fmoy(t2+\Delta t) - Fmoy(t2) + \int_{t2}^{t2+\Delta t} \mu(t)\,dt \right|$$

in which:

- B represents the width of the band of frequencies processed to obtain a radar image;
- Fmoy represents the mean Doppler frequency of the radar image considered;
- μ(t) represents the Doppler gradient determined and varying with time t; and
- t2 represents a reference time relating to the time of detection of the first of said two radar images considered.

6. Method according to any one of the preceding claims, enabling additional calculation of the speed of a mobile target (CM) moving over said observed territory,
**characterised in that**:

- the radial speed Vr of said mobile target (CM) is determined from the expression:

$$Vr = Vnom.\cos\alpha c - (\lambda/2).Fc$$

in which:

- Vnom is the nominal speed of the aircraft (A);
- λ is the wavelength of the electromagnetic radiation (S1) transmitted;
- αc is the azimuth of the mobile target (CM) relative to the aircraft (A); and

18

**.** Fc is the Doppler frequency obtained from the electromagnetic radiation (S2) reflected by said mobile target (CM); and

**-** the transverse speed Vt of said mobile target (CM) is determined from the expression:

$$Vt = Vnom.\sin\alpha c - \sqrt{(Vnom^2.\sin\alpha c^2) + (\lambda.d.\Delta\mu)/2}$$

in which:

**.** $\underline{d}$ is the distance between the mobile target (CM) and the radar; and
**.** $\Delta\mu$ is the difference between the Doppler gradient associated with the mobile target and that associated with any fixed point of the observed territory.

**7.** Synthetic aperture radar for implementing the method specified in any one of claims 1 through 6, including:

**-** means (2) for transmitting electromagnetic radiation (S1) towards a territory (T) overflown by the aircraft (A) carrying said radar;
**-** means (2) for detecting a signal (S2) corresponding to said electromagnetic radiation reflected by said overflown and observed territory;
**-** means (3) for carrying out a distance determination processing operation using said detected signal (S2);
**-** means (5) for carrying out a focusing processing operation to correct an unwanted phase-shift in said detected signal (S2) and due notably to the displacement of said synthetic aperture radar, in order to obtain a corrected signal;
**-** means (7) for carrying out a frequency determination processing operation on said corrected signal; and
**-** means (9) for carrying out a transposition processing operation in order to transpose into a reference frame of reference (OXYZ) tied to said observed territory (T) the results obtained from the previous operations and defined in a distance and frequency frame of reference (R) tied to the radar, in order to form a radar image defined in said reference frame of reference (OXYZ) tied to the observed territory,

**characterised in that** it further includes calculation means (11) for determining, exclusively from data received from the preceding means, a Doppler gradient that is representative of said unwanted phase-shift in the detected signal (S2), said calculation means (11) transmitting the Doppler gradient determined to said focusing means (5) and to said transposition means (9) for processing, and **in that** said transposition means (9) effect transposition by means of an auxiliary frame of reference (Rref) which is determined using said Doppler gradient.

**8.** Synthetic aperture radar according to claim 7,
**characterised in that** it includes means (34) for determining the speed of a mobile target (CM) moving across the observed territory using the method specified in claim 6.

FIG.1

## FIG.2

## FIG.3

FIG.4

FIG.5